# EUROPÄISCHE PATENTANMELDUNG

(11) **EP 4 840 313 A1**
(43) Veröffentlichungstag der Anmeldung: **18.11.2026**
(21) Anmeldenummer: 26176245.4
(22) Anmeldetag: 04.05.2026
(51) Int. Cl.: A21B 1/26, A21B 1/48, F24C 15/34, F28D 20/00, F28D 21/00

(54) **BACKANLAGE MIT WÄRMESPEICHER**

(30) Priorität: 16.05.2025 DE 102025119105
(71) Anmelder: Werner & Pfleiderer Industrielle Backtechnik GmbH, 71732 Tamm (DE)
(72) Erfinder: Knost, Dieter, 91550 Dinkelsbühl (DE); Speck, Ulrich, 71642 Ludwigsburg (DE); Bauser, Rüdiger, 89075 Ulm (DE)
(74) Vertreter: Rau, Schneck & Hübner Patentanwälte Rechtsanwälte PartGmbB

(57) **Zusammenfassung**

Eine Backanlage (1) hat einen Backofen (2) mit einem Backraum (3) und einer Heißgas-Führungseinrichtung (4) zur Beheizung des Backraums. Eine Heizeinrichtung (15) der Backanlage (1) dient zur Beheizung des in der Heißgas-Führungseinrichtung (4) geführten Heißgases. Die Heizeinrichtung (15) hat einen Wärmespeicher (16) und eine elektrische Heizung (18) zur Beheizung eines Wärmespeichermediums (17) des Wärmespeichers (16). Letzteres steht mit zu beheizendem Gas in Wärmekontakt. Der Wärmespeicher (16) steht in Wärmeverbindung mit einer Heißgas-Vorlaufleitung (7) der Heizeinrichtung (15). Es resultiert eine Backanlage mit einer beispielsweise im Vergleich zu einem Brenner alternativen Beheizung.

## Beschreibung

Der Inhalt der deutschen Patentanmeldung DE 10 2025 119 105.0 wird durch Bezugnahme hierin aufgenommen.

Die Erfindung betrifft eine Backanlage mit mindestens einem Backofen und einer Heizeinrichtung.

Ein Backofen in Form eines Durchlauf-Backofens ist bekannt aus der DE 10 2020 208 674 A1 sowie aus den dort genannten Referenzen.

Es ist eine Aufgabe der vorliegenden Erfindung, eine Backanlage mit einer im Vergleich zum Stand der Technik alternativen Beheizung bereitzustellen.

Diese Aufgabe ist erfindungsgemäß gelöst durch eine Backanlage mit den im Anspruch 1 angegebenen Merkmalen.

Bei der Beheizung des Backraums über die Heizeinrichtung kann es sich um eine indirekte Backraum-Beheizung handeln, bei der der Backraum mit dem zum Beheizen verwendeten Heizmedium, also insbesondere mit dem Heißgas, nicht direkt in Kontakt kommt. Alternativ kann auch eine direkte Backraum-Beheizung erfolgen. Als Wärmespeichermedium des Wärmespeichers der Heizeinrichtung kann Schamott-Stein zu Einsatz kommen. Die Heizeinrichtung und/oder der Backofen kann einen zusätzlichen Brenner, insbesondere als Bestandteil des Backofens, aufweisen. Es ist dann ein Hybrid-Betrieb der Backanlage möglich, bei der nach Wahl Heizenergie über die elektrische Heizung und/oder über den Brenner zur Verfügung gestellt wird. Eine Energiequelle für die elektrische Heizung kann als regenerative Energiequelle ausgeführt sein, z. B. als Solaranlage und/oder als Windkraftanlage. Die Energiequelle für die elektrische Heizung kann lokal, insbesondere in der Umgebung der Backstube, bereitgestellt sein. Idealerweise ist eine Anbindung der Backanlage an ein öffentliches Stromnetz nicht erforderlich. Auch ein Hybrid-Betrieb in Bezug auf die Energieversorgung ist möglich, also ein Betrieb, bei dem wahlweise oder auch kombiniert die Energie lokal und/oder über ein öffentliches Netz zur Verfügung gestellt wird. Die Heizeinrichtung kann mehrere Backöfen versorgen, sodass die Backanlage neben der Heizeinrichtung mehrere Backöfen, insbesondere verschiedenen Backofen-Typs, aufweisen kann.

Der Wärmespeicher kann in Form eines Standard-Frachtcontainers bereitgestellt sein, beispielsweise in Form eines 20 Fuß- oder 40 Fuß-Containers.

Über den Wärmespeicher kann die Heizeinrichtung beispielsweise eine thermische Leistung im Bereich zwischen 100 kW und 250 kW bereitstellen.

Die Heizeinrichtung kann als Nachrüst-Bausatz bereitgestellt und mit existierenden Backöfen zur Backanlage kombiniert werden.

Die Solaranlage kann beispielsweise so ausgelegt sein, dass sie pro Tag Energie im Bereich zwischen 500 kWh und 1200 kWh bereitstellt. Dies übersteigt einen typischen täglichen Energiebedarf eines Backofens.

Insgesamt kann ein kostengünstiger und, aufgrund einer Verwendung potentiell regenerativer Energiequellen, nachhaltiger Betrieb der Backanlage gewährleistet sein.

Alternativ oder zusätzlich zu Heißgas als Medium zur Beheizung des Backraums kann auch Thermoöl Verwendung finden. Anstelle einer Heißgas-Führungseinrichtung kommt dann eine Thermoöl-Führungseinrichtung zum Einsatz. Die Heizeinrichtung dient dann zur Beheizung des in der Thermoöl-Führungseinrichtung geführten Thermoöls. Diese Beheizung kann dann beispielsweise über einen Wärmetauscher zwischen einem Thermoöl-Kreislauf der Thermoöl-Führungseinrichtung und dem Wärmespeichermedium des Wärmespeichers realisiert sein. Eine Vorlauftemperatur des Heizmediums kann im Bereich zwischen 250° C und 400° C liegen.

Eine Wärmeverbindung nach Anspruch 2 hat sich bewährt. Grundsätzlich kann diese Wärmeverbindung auch über einen Wärmespeichermedium-Kreislauf, zu dem der Wärmespeicher gehört, realisiert werden.

Ein Wärmetauscher nach Anspruch 3 ermöglicht eine Trennung zwischen einem dem Wärmespeicher zugeordneten Wärmespeichermedium der Heizeinrichtung und einen dem Backofen zugeordneten Heizmedium (Heißgas/Thermoöl).

Ein Zumischelement nach Anspruch 4, das grundsätzlich auch bei einem mit Thermoöl geheiztem Backofen zum Einsatz kommen kann, ermöglicht eine Temperaturvorgabe einer Temperatur des Heißgases in der Vorlaufleitung und somit eine Temperaturvorgabe des jeweiligen Backraums. Dies kann für einen gesteuerten oder auch für einen geregelten Betrieb des Backofens genutzt werden.

Eine Venturidüse nach Anspruch 5 ermöglicht ein präzises Zumischen. Die Venturidüse gewährleistet ein Verschneiden eines heißen Heißgas-Stroms in der Heißgas-Vorlaufleitung mit kühlerer Raumluft aus einer Umgebung. Alternativ oder zusätzlich kann auch ein Verschneiden mit Heißgas mit einer Rücklauftemperatur erfolgen, welches über eine Heißgas-Rücklaufleitung zugeführt wird.

Alternativ zu einer Venturidüse kann das Zumischelement auch als Bypass-Klappe oder als Bypass-Schieber ausgeführt sein.

Eine Heißgas-Rücklaufleitung nach Anspruch 6 ermöglicht einen Heißgas-Kreislauf der Backanlage.

Ein Wärmetauscher nach Anspruch 7 ermöglicht eine Temperaturvorgabe einer Vorlauftemperatur des Heizmediums für den Backofen, also des Heißgases oder auch des Thermoöls. Alternativ oder zusätzlich kann auch eine direkte Leitungsverbindung zwischen der Heißgas-Rücklaufleitung und der Heißgas-Vorlaufleitung, insbesondere über ein Kreislauf-Zumischelement, erfolgen. Ein derartiges Kreislauf-Zumischelement kann wiederum als Klappe oder Schieber ausgeführt sein. Der Wärmetauscher, über den die Heißgas-Rücklaufleitung mit der Heißgas-Vorlaufleitung in Wärmeverbindung steht, kann derjenige sein, über den auch eine Wärmeverbindung des Wärmespeichers mit der Heißgas-Vorlaufleitung bereitgestellt ist.

Eine Abluftleitung nach Anspruch 8 ermöglicht insbesondere eine kontrollierte Entschwadung des Backofens, soweit dieser über eine Beschwadungseinrichtung verfügt.

Bei einer Ausgestaltung des Backofens als Durchlaufofen nach Anspruch 9 kommen die Vorteile der Backanlage besonders gut zum Tragen. In den Durchlaufzonen kann über die jeweilige Fluidverbindung eine eigene Zonentemperatur erreicht werden. Insbesondere eine Zonentemperatur-Einstellung ist möglich.

Bei einer Ausgestaltung nach Anspruch 10 ist eine gesteuerte und/oder geregelte Zonentemperatur-Vorgabe innerhalb der Durchlaufzonen möglich. Hierüber kann ein insbesondere Backgut-abhängiges Temperaturprofil längs eines Backförderweges durch den Durchlaufofen eingestellt werden.

Über eine Steuer/Regeleinrichtung nach Anspruch 11 kann insbesondere eine unabhängige Temperaturvorgabe innerhalb verschiedener Zonen des Backofens, insbesondere innerhalb verschiedener Durchlaufzonen bei einer Ausführung des Backofens als Durchlaufofen, gewährleistet sein.

Ausführungsbeispiele der Erfindung werden nachfolgend anhand der Zeichnung näher erläutert. In dieser zeigen:
- Fig. 1: schematisch eine Backanlage mit einem Backofen und einer Heizeinrichtung, wobei eine Durchlaufzone des Backofens im Querschnitt dargestellt ist;
- Fig. 2: im Vergleich zu Fig. 1 stark schematisch eine Seitenansicht des Backofens der Backanlage mit insgesamt vier Durchlaufzonen; und
- Fig. 3: in einer zu Fig. 1 ähnlichen Schnittdarstellung eine weitere Ausführung der Backanlage.
Eine Backanlage 1 hat einen Backofen 2, der als Durchlaufofen ausgeführt ist. Es kann sich hierbei um einen einetagigen oder auch um einen mehretagigen Durchlaufofen nach Art desjenigen handeln, der beispielsweise bekannt ist aus der DE 10 2020 208 674 A1.

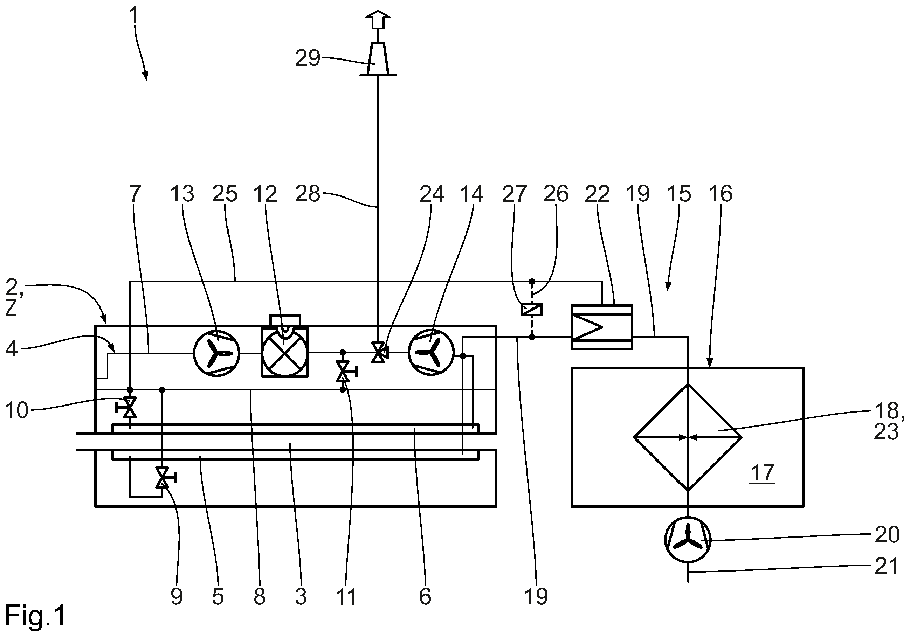

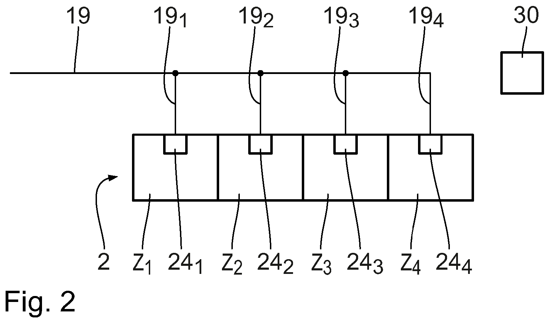

Fig. 1 zeigt eine Durchlaufzone Z des Backofens 2. Insgesamt hat der Backofen 2 in der dargestellten Ausführung vier Durchlaufzonen Z1, Z2, Z3 und Z4 (vgl. Fig. 2), die in Backförderrichtung für Backgut hintereinander angeordnet sind. Je nach Ausführung des Backofens 2 kann dieser noch eine andere Anzahl von Durchlaufzonen Zᵢ aufweisen, beispielsweise zwei bis 10 Durchlaufzonen Zᵢ.

Der Backofen 2 hat einen Backraum 3. Der Backraum 3 verläuft abschnittsweise durch die Durchlaufzonen Zᵢ. Je nach Ausführung des Backofens 2 kann dieser auch mehrere etagenweise übereinander angeordnete Backräume aufweisen.

Der Backofen 2 hat weiterhin eine Heißgas-Führungseinrichtung 4 zur Beheizung des Backraums 3. Zur Heißgas-Führungseinrichtung 4 gehört, zugeordnet zum jeweiligen Backraum 3, ein Unterhitze-Register 5 und ein Oberhitze-Register 6. Anstelle von Heißgas kann auch ein anderes Fluid als Heizmedium für den Backofen 2 zum Einsatz kommen, je nach dessen Ausführung. Ein derartiges anderes Heizmedium kann beispielsweise Thermoöl sein.

Die Heißgas-Führungseinrichtung 4 hat eine Heißgas-Vorlaufleitung 7, die über Heißgas-Leitungsabschnitte der Heißgas-Führungseinrichtung 4 mit dem Unterhitze-Register 5 und dem Oberhitze-Register 6 in Fluidverbindung steht.

Weiterhin hat die Heißgas-Führungseinrichtung 4 eine Heißgas-Rücklaufleitung 8, die wiederum mit dem Unterhitze-Register 5 und dem Oberhitze-Register 6 über entsprechende Leitungsabschnitte in Fluidverbindung steht. In diesen Leitungsabschnitten sind ansteuerbare Drosselelemente 9, 10 angeordnet, über die ein Mengenfluss des Heißgases durch das Unterhitze-Register 5 bzw. das Oberhitze-Register 6 vorgegeben werden kann.

Eine Beheizung des jeweiligen Backraums 3 mittels des Heißgases kann, wie in der Fig. 1 veranschaulicht, indirekt erfolgen, sodass das Heißgas nicht direkt durch den jeweiligen Backraum 3 strömt, sondern ein Leitungssystem mit der Heißgas-Führungseinrichtung 4 vom jeweiligen Backraumvolumen getrennt ist. Alternativ kann das Heißgas dem jeweiligen Backraum 3 auch direkt durchströmen.

Weiterhin hat der Backofen 2 eine nicht näher dargestellte Beschwadungseinrichtung. Ein Schwadenschieber 11 stellt eine kontrollierte Be- bzw. Entschwadung des Backofens 2 sicher.

Die Heißgas-Vorlaufleitung 7 kann mit einem Brenner 12 des Backofens 2 in Wärmeverbindung stehen, wie in der Fig. 1 angedeutet. Ein derartiger Brenner ist allerdings nicht zwingend.

Die Heißgas-Führungseinrichtung 4 hat mindestens einen Ventilator zur Umwälzung des Heißgases durch die Register 5, 6. In der Ausführung nach Fig. 1 liegen zwei derartige Umwälzventilatoren 13, 14 vor, die als Axialventilatoren ausgeführt sind. Der Brenner 12 steht mit der Heißgas-Vorlaufleitung 7 in einem Abschnitt zwischen den beiden Umwälzventilatoren 13, 14 in Wärmeverbindung.

Zur Beheizung des in der Heißgas-Führungseinrichtung 4 geführten Heißgases dient eine Heizeinrichtung 15 der Backanlage 1. Die Heizeinrichtung 15 hat einen Wärmespeicher 16 mit einem Wärmespeichermedium 17, welches mit zu beheizendem Gas in Wärmekontakt steht. Bei dem Wärmespeichermedium 17 kann es sich um Schamott-Steine handeln. Eine elektrische Heizung 18 dient zur Beheizung des Wärmespeichermediums 17. Eine Energiequelle für die elektrische Heizung 18 kann regenerativ sein und kann beispielsweise über Solarenergie zur Verfügung gestellt sein. Diese Energiequelle kann insbesondere lokal bereitgestellt sein, also nicht über ein öffentliches Stromnetz. Auch eine hybride Energieversorgung der elektrischen Heizung 18 über eine lokale Energiequelle und/oder über ein öffentliches Stromnetz ist möglich.

Die Heizeinrichtung 15 kann so ausgeführt sein, dass sie mehrere Backöfen nach Art des Backofens 2 oder auch mehrere unterschiedliche Backofen-Typen, beispielsweise einen Durchlaufofen nach Art des Backofens 2 sowie mindestens einen Etagenbackofen zum Schuss-auf-Schuss-Backen, mit Heizenergie versorgt.

Der Wärmespeicher 16 der Heizeinrichtung 15 steht mit der Heißgas-Vorlaufleitung 7 des Backofens 2 in Wärmeverbindung.

Die Wärmeverbindung des Wärmespeichers 16 mit der Heißgas-Vorlaufleitung 7 hat eine Zulaufleitung 19 und einen Strömungsventilator 20, der über einen Saugstutzen 21 Umgebungsluft ansaugt. Weiterhin hat diese Wärmeverbindung einen Wärmetauscher 22. Über diesen Wärmetauscher 22 kann ein Wärmetauschen zwischen einem speicherseitigen Zulaufabschnitt der Zulaufleitung 19 und einem ofenseitigen Zulaufabschnitt der Zulaufleitung 19 erfolgen. Alternativ kann das über die Heizeinrichtung 15 erhitzte Gas dem Backofen 2 auch direkt zugeführt werden. In diesem Fall steht ein Gas-Führungskanal 23 im Wärmespeicher 16 mit der Heißgas-Vorlaufleitung 7 in direkter Fluidverbindung.

In der Heißgas-Vorlaufeinleitung 7 ist ein Zumischelement 24 angeordnet. Letzteres dient zum Zumischen von im Vergleich zum Heißgas kühlerem Gas und damit zur Temperatursteuerung einer Heißgas-Vorlauftemperatur in der Heißgas-Vorlaufleitung 7. Bei der in der Fig. 1 veranschaulichten Ausführung ist das Zumischelement 24 zwischen den beiden Axialventilatoren 13 und 14 in der Heißgas-Vorlaufleitung 7 angeordnet.

Das Zumischelement 24 ist als Venturidüse ausgeführt. Alternativ kann das Zumischelement 24 als Bypass-Klappe oder auch als Bypass-Schieber ausgeführt sein.

Die Heißgas-Rücklaufleitung 8 steht über einen Rückflussabschnitt 25, den Wärmetauscher 22 und den ofenseitigen Zulaufabschnitt der Zulaufleitung 19 mit der Heißgas-Vorlaufleitung 7 in Wärmeverbindung. Alternativ oder zusätzlich zu einer derartigen Wärmetauscher-Verbindung kann diese Verbindung zwischen der Heißgas-Rücklaufleitung 8 und der Heißgas-Vorlaufleitung 7 auch durch eine direkte Einströmung realisiert sein. Dies ist in der Fig. 1 durch einen gestrichelten Verbindungsleitungsabschnitt 26 zwischen dem Rückflussabschnitt 25 und dem ofenseitigen Zulaufabschnitt der Zulaufleitung 19 angedeutet. In diesem Verbindungsleitungsabschnitt 26 ist ein Kreislauf-Zumischelement 27 angeordnet, das wiederum als Klappe oder Schieber ausgeführt sein kann.

Bei dem Wärmetauscher 22, über den der Rücklaufabschnitt 25 mit der Zulaufleitung 19 in Wärmeverbindung steht, kann es sich um den gleichen Wärmetauscher handeln, mit dem wiederum der speicherseitige Zulaufabschnitt der Zulaufleitung 19 mit dem ofenseitigen Zulaufabschnitt der Zulaufleitung 19 in Wärmeverbindung steht. Alternativ kann es sich bei diesen Wärmetauschern auch um verschiedene Wärmetauscher handeln.

Eine Abluftleitung 28 verbindet die Heißgas-Führungseinrichtung 4 mit einem Kamin 29.

Jede der Durchlaufzonen Zᵢ (i = 1 bis 4) hat eine Heißgas-Vorlaufleitung entsprechend der in der Fig. 1 dargestellten Heißgas-Vorlaufleitung 7. Die jeweilige Heißgas-Vorlaufleitung der Durchlaufzone Zᵢ ist über eine eigene Fluidverbindung mit dem Wärmespeicher 16 verbunden.

Fig. 2 verdeutlicht diese Fluidverbindung. Die Zulaufleitung 19 hat in diesem Fall den jeweiligen Durchlaufzonen Zᵢ zugeordnete Zulaufabschnitte 19ᵢ (i = 1 bis 4). Die Verbindung dieser Zulaufabschnitte 19ᵢ mit den jeweiligen Heißgas-Vorlaufleitungen 7 der Durchlaufzonen Zᵢ erfolgt über ein jeweiliges Zumischelement 24ᵢ nach Art des Zumischelements 24 nach Fig. 1. Alternativ kann auch direkt im jeweiligen Zulaufabschnitt 19ᵢ beispielsweise ein ansteuerbares Drosselelement nach Art einer Klappe oder eines Schiebers angeordnet sein.

Die jeweiligen Zumischelemente 24ᵢ, 27 sowie die weiteren Drosselelemente 9, 10 stehen mit einer zentralen Steuer/Regeleinrichtung 30 der Backanlage 1 in Signalverbindung. Hierüber kann eine unabhängige Temperaturvorgabe des Heißgases und damit eine unabhängige Heizleistungs-Vorgabe in den Durchlaufzonen Zᵢ erfolgen.

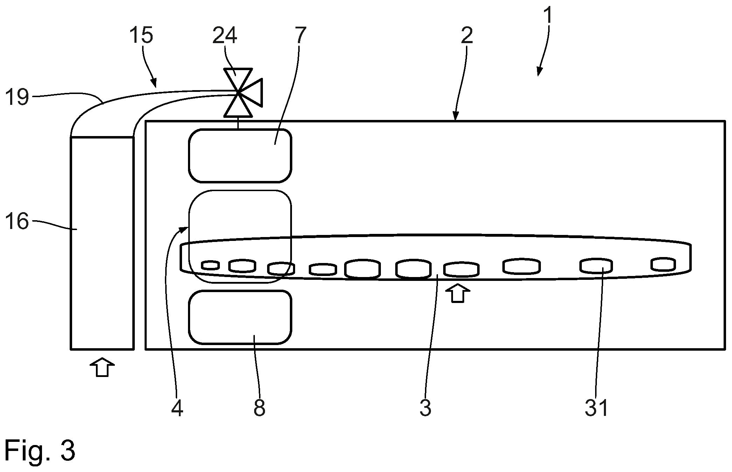

Fig. 3 zeigt eine weitere Ausführung der Backanlage 1. Komponenten, die denjenigen entsprechen, die vorstehend unter Bezugnahme auf die Fig. 1 und 2 bereits erläutert wurden, tragen die gleichen Bezugsziffern und werden nicht nochmals im Einzelnen diskutiert.

Bei der Heißgasführung nach Fig. 3 steht die Zulaufleitung 19 mit der Heißgas-Vorlaufleitung 7 über ein Anschlussstück, aufweisend das Zumischelement 24, beispielsweise die Venturidüse, in direkter Verbindung.

Bei der Darstellung nach Fig. 3 sind im Backraum 3 auch zu backende Teiglinge 31 veranschaulicht.

Die Backanlage 1 wird folgendermaßen betrieben:
Zunächst wird über eine der lokalen Backstube zugeordnete Energiequelle, beispielsweise eine Solaranlage, die elektrische Heizung 18 für den Wärmespeicher 16 der Heizeinrichtung 15 solange betrieben, bis der Wärmespeicher 16 eine Nenn-Heizleistung erbringen kann. Sodann wird ausgewählt, welcher Typ Backgut erzeugt werden soll und sich hieraus ergebende Sollwerte für die Backraumtemperaturen in den Durchlaufzonen Zᵢ vorgegeben. Über die Steuer/Regeleinrichtung 30 erfolgt angepasst an diese Vorgabedaten dann eine Temperatureinstellung in den Durchlaufzonen Zᵢ. Dies erfolgt durch entsprechende Ansteuerung der Zumischelemente 24ᵢ und ggf. 27. Zusätzlich kann auch noch ein Heizverhältnis Unterhitze/Oberhitze durch entsprechende Ansteuerung der Drosselelemente 9, 10 vorgegeben werden.

Nach Erreichen der Soll-Backraumtemperaturen in den Durchlaufzonen Zᵢ kann dann der Durchlauf-Backofen 2 betrieben werden. In den vier Durchlaufzonen Zᵢ kann beispielsweise bei zu backendem Weißbrot, welches ohne Backgutträger direkt durch den Durchlauf-Backofen 2 gefördert wird, eine prozentuale Heizleistungsverteilung in den Durchlaufzonen Z1 / Z2 / Z3 / Z4 von 80 % / 100 % / 80 % / 60 % vorgegeben werden. Bei zu backendem Weißbrot, das in einem Backgutträger gefördert ist, beispielsweise bei französischem Weißbrot, das in Metallformen durch den Durchlauf-Backofen 2 gefördert wird, kann diese Heizleistungs-Verteilung über die Durchlaufzonen Z1 / Z2 / Z3 / Z4 wie folgt sein: 100 % / 80 % / 80 % / 60 %.

Für den Fall, dass die Versorgungsleistung der lokalen Energiequelle nicht ausreicht, kann entweder Strom aus dem öffentlichen Netz zugespeist werden oder es kann zusätzlich der jeweilige Brenner 12 des Backofens 2 zum Einsatz kommen.

## Patentansprüche

1. Backanlage (1)
- mit mindestens einem Backofen (2),
-- mit mindestens einem Backraum (3),
-- mit einer Heißgas-Führungseinrichtung (4) zur Beheizung des Backraums (3),
- mit einer Heizeinrichtung (15) zur Beheizung des in der Heißgas-Führungseinrichtung (4) geführten Heißgases,
-- mit einem Wärmespeicher (16) mit einem Wärmespeichermedium (17), welches mit zu beheizendem Gas in Wärmekontakt steht, wobei der Wärmespeicher (16) in Wärmeverbindung mit einer Heißgas-Vorlaufleitung (7) der Heizeinrichtung (15) steht,
-- mit einer elektrischen Heizung (18) zur Beheizung des Wärmespeichermediums (17).

2. Backanlage nach Anspruch 1, **dadurch gekennzeichnet, dass** die Wärmeverbindung des Wärmespeichers (16) mit der Heißgas-Vorlaufleitung (7) eine Zulaufleitung (19) und einen Umgebungsluft ansaugenden Strömungsventilator (20) aufweist.

3. Backanlage nach Anspruch 1 oder 2, **dadurch gekennzeichnet, dass** die Wärmeverbindung einen Wärmetauscher (22) aufweist.

4. Backanlage nach einem der Ansprüche 1 bis 3, **gekennzeichnet durch** ein Zumischelement (24) für im Vergleich zum Heißgas kühleres Gas, angeordnet in der Heißgas-Vorlaufleitung (7).

5. Backanlage nach Anspruch 4, **dadurch gekennzeichnet, dass** das Zumischelement (24) als Venturidüse ausgeführt ist.

6. Backanlage nach einem der Ansprüche 1 bis 5, **dadurch gekennzeichnet, dass** eine Heißgas-Rücklaufleitung (8) der Heizeinrichtung (15) mit der Heißgas-Vorlaufleitung (7) in Wärmeverbindung steht.

7. Backanlage nach Anspruch 6, **dadurch gekennzeichnet, dass** die Heißgas-Rücklaufleitung (8) mit der Heißgas-Vorlaufleitung (7) über einen Wärmetauscher (22) in Wärmeverbindung steht.

8. Backanlage nach einem der Ansprüche 1 bis 7, **gekennzeichnet durch** eine Abluftleitung (28), die die Heißgas-Führungseinrichtung (4) des Backofens (2) mit einem Kamin (29) verbindet.

9. Backanlage nach einem der Ansprüche 1 bis 8, **dadurch gekennzeichnet, dass** der Backofen (2) als Durchlaufofen mit mehreren Durchlaufzonen (Zᵢ) ausgeführt ist, wobei jede der Durchlaufzonen (Zᵢ) eine Heißgas-Vorlaufleitung (7) aufweist, die über eine eigene Fluidverbindung (19ᵢ) mit dem Wärmespeicher (16) verbunden ist.

10. Backanlage nach Anspruch 9, **dadurch gekennzeichnet, dass** die Heißgas-Vorlaufleitung (7) der jeweiligen Durchlaufzonen (Zᵢ) ein Zumischelement (24ᵢ) nach Anspruch 4 oder 5 aufweist.

11. Backanlage nach Anspruch 10, **gekennzeichnet durch** eine Steuer/Regeleinrichtung (30), die mit den Zumischelementen (24ᵢ) der Durchlaufzonen (Zᵢ) in Signalverbindung steht.
